# EUROPÄISCHE PATENTSCHRIFT

(11) **EP 4 446 749 B1**
(45) Veröffentlichungstag und Bekanntmachung des Hinweises auf die Patenterteilung: **22.04.2026**
(21) Anmeldenummer: 24191797.0
(22) Anmeldetag: 03.11.2022
(51) Int. Cl.: G01N 35/04

(54) **TRANSPORTSYSTEM FÜR DEN TRANSPORT VON PROBEN IN EINEM MEDIZINISCHEN ANALYSELABOR**
TRANSPORT SYSTEM FOR TRANSPORTING SAMPLES IN A MEDICAL ANALYSIS LABORATORY
SYSTÈME DE TRANSPORT POUR LE TRANSPORT D'ÉCHANTILLONS DANS UN LABORATOIRE D'ANALYSE MÉDICALE

(43) Veröffentlichungstag der Anmeldung: 16.10.2024
(62) Teilanmeldung aus: 22205303.5
(73) Patentinhaber: ConScience analytics GmbH, 21149 Hamburg (DE)
(72) Erfinder: von Froreich, André, Dr., 25997 Hörnum (DE)
(74) Vertreter: Raffay & Fleck

(56) Entgegenhaltungen:
- US-A1- 2002 146 347
- US-A1- 2010 261 408
- US-A1- 2017 217 027

## Beschreibung

Die vorliegende Erfindung betrifft ein Transportsystem für den Transport von Proben in einem Analyselabor, insbesondere einem medizinischen und/oder chemischen Analyselabor, insbesondere ein solche mit den Merkmalen des Oberbegriffs des Anspruchs 1.

In der Medizin ist ein für die Diagnostik erheblich relevanter Bereich die sogenannte Labormedizin. In diesem Bereich arbeiten spezialisierte und hochtechnisierte medizinische Analyselabors, in denen aus verschiedenen medizinischen Einrichtungen, wie Arztpraxen oder Krankenhäusern, eingereichte medizinische Proben entsprechend eines vorgelegten Auftrages untersucht und analysiert werden. Bei solchen Proben kann es sich insbesondere um solche von Körperflüssigkeiten, wie zum Beispiel Blutproben oder Urinproben, handeln, aber auch um Stuhlproben oder Abstriche o. ä. Die Arbeit in solchen Analyselaboren umfasst dabei insbesondere nicht nur medizinische bzw. klinisch-chemische Untersuchungen bzw. Analysen, sondern auch solche Analysen chemischer Natur, sodass in solchen Analyselaboren für gewöhnlich nicht nur medizinische, sondern auch chemische Proben untersucht werden können.

Die Proben werden dabei typischerweise von den Einsendern in hierfür vorgesehenen Probengefäßen bei den medizinischen respektive chemischen Analyselabors eingereicht. Hierbei handelt es sich weit überwiegend um röhrchenförmige Gefäße, in der Regel aus transparentem Kunststoff, die für den Versand und das Handling mit einer Kappe, zumeist einem Schraubdeckel oder Stopfen, verschlossen sind. Häufig sind entsprechende Probengefäße von den Anbietern bereits, insbesondere durch Auswahl von farbkodierten Kappen, vorbestimmt für die Aufnahme bestimmter Proben bzw. von Proben für die Durchführung bestimmter Analytik.

Die eingereichten Probengefäße sind von den Absendern mit entsprechend codierten Datensätzen versehen, aus denen sich Rückschlüsse auf den Ursprung der Probe, d. h. den Einsender sowie den Patienten, von dem die Probe stammt, ziehen lassen, wie auch Rückschlüsse auf den mit der Probeneinsendung verbundenen Analyseauftrag. Diese Kodierungen sind in der Regel durch Barcodes oder QR-Code auf dem Probengefäße aufgebracht und können zum Beispiel mit einem Auftragsschreiben oder einem elektronisch gesendeten Auftrag korrelieren, in dem die entsprechenden Daten wiedergegeben sind.

In den medizinischen Analyselabors sind typischerweise eine Vielzahl von Analysegeräten und -einrichtungen vorhanden, mit denen die Proben bestimmten, für die medizinische Diagnostik relevanten Analysen unterzogen werden können, zum Beispiel klinisch-chemische Untersuchungen, morphologische Blutuntersuchungen, Hormonuntersuchungen, immunologische Untersuchungen, Markeruntersuchungen für bestimmte Tumormarker und dergleichen. Auch sind in den medizinischen Analyselabors Vorbereitungsgeräte bzw. Geräte für die sogenannte Präanalytik vorhanden, zum Beispiel automatische Zentrifugen, mit denen eingehende Proben entsprechend der georderten Analytik für eine nachfolgende Probenanalyse vorbereitet werden können.

In modernen medizinischen und/oder chemischen Analyselabors werden mit hoher Durchsatzrate und hohem Automatisierungsgrad medizinische und/oder chemische Probenanalysen durchgeführt. Eingehende Proben werden in ein automatisiertes Analysesystem überführt, insbesondere in ein Transportsystem eingebracht, mit dem die Proben dann automatisiert zu vorbestimmten Zielen und Zwischenzielen, zum Beispiel zunächst einem ersten Analysegerät für eine erste medizinische Analyse, anschließend einem zweiten Analysegerät für eine zweite medizinische Analyse, abschließend einem Archiv, oder zunächst einem Behandlungsgerät, wie einer Zentrifuge, anschließend einem Analysegerät und abschließend einem Archiv, zugeführt werden bzw. zwischen den einzelnen Stationen weitertransportiert werden. Da im Bereich der Labormedizin, insbesondere für standardisierte Analysen, nur vergleichsweise geringe Vergütungen durch das Gesundheitssystem gezahlt werden, sind für einen wirtschaftlichen Betrieb eines Analyselabors ein hoher Automatisierungsgrad und eine hohe Durchsatzrate angestrebt. Ein besonderes Augenmerk gilt hierbei dem Probentransport innerhalb der Laboreinrichtung, da die Bearbeitungsgeschwindigkeit in diesem Teil, also der Laborlogistik, regelmäßig einen den Durchsatz begrenzenden Faktor darstellt. Entsprechend sind in den großen medizinischen Analyselabors bereits heute Transportsysteme etabliert, in denen die Proben, genauer gesagt die mit den jeweiligen Proben gefüllten Probengefäße, mit einzelnen Transportwagen entlang vorgegebener Transportstrecken verbracht und zu den jeweiligen Zielorten, seien dies Vorbereitungsgeräte oder Analysegeräte, transportiert werden. Ein Beispiel für ein solches Transportsystem mit entsprechenden Transportwagen ist in der US 2010/0239461 A1 offenbart. Ein weiteres Beispiel ist in der EP 2 629 100 A1 beschrieben. Auch die EP 2 629 099 A1 sowie die US2017217027A1 befassen sich mit dem automatisierten Probentransport in medizinischen Analyselabors.

Problematisch an den bekannten Transportsystemen, wie sie für den Transport von Proben in medizinischen Analyselabors eingesetzt werden, ist, dass diese einerseits in der Transportgeschwindigkeit und damit Durchsatzrate des Labors beschränkt sind, dass andererseits die vorgeschlagenen Systeme im Aufbau kompliziert und ausfall- bzw. wartungsanfällig sind. Hier setzt die vorliegende Erfindung an, deren Zielsetzung es ist, ein diesbezüglich verbessertes Transportsystem für den Transport von Proben in einem medizinischen Analyselabors anzugeben, welches robust und möglichst wartungsarm ist und welches einen hohen Durchsatz an Proben in dem medizinischen Analyselabor ermöglicht, aufgrund von hoher Taktrate und hoher Transportgeschwindigkeit.

Die Lösung dieser Aufgabenstellung ist durch ein wie nachfolgend beschriebenes Transportsystem für den Transport von Proben in einem Analyselabor, insbesondre medizinischen und/oder chemischen Analyselabor, gegeben.

Demnach weist ein Transportsystem für den Transport von Proben in einem Analyselabor, insbesondere medizinischen und/oder chemischen Analyselabor, zunächst eine Fahrwege vorgebende Transportbahn auf. Weiterhin ist wenigstens ein für ein Bewegen entlang der Fahrwege auf der Transportbahn eingerichteter, selbstfahrender Transportwagen vorgesehen, können insbesondere mehrere, vorzugsweise eine Vielzahl, solcher Transportwagen Bestandteil des erfindungsgemäßen Transportsystems sein. Der mindestens eine Transportwagen weist eine Aufnahme für eine zu transportierenden Probe auf, typischerweise also eine Aufnahme, in der ein die Probe an sich enthaltendes Probengefäße aufgenommen, gehalten und mitgeführt werden kann. Der Transportwagen des erfindungsgemäßen Transportsystems weist elektromotorisch angetriebene Räder, einen elektrischen Energiespeicher zum Bereitstellen elektrischer Energie für den elektromotorischen Antrieb der Räder und weiterhin eine Steuerung für den elektromotorischen Antrieb auf. Mit der Steuerung kann der elektromotorische Antrieb insbesondere hinsichtlich einer Antriebsgeschwindigkeit der Räder reguliert bzw. eingestellt werden. Die Steuerung kann weiterhin insbesondere zum Austausch von Daten und Signalen mit einer externen Umgebung eingerichtet sein.

Das Besondere an dem erfindungsgemäßen Transportsystem in einer erfindungsgemäßen und erfindungswesentlichen Variante besteht nun darin, dass der Transportwagen vier Räder aufweist, die jeweils in einer Anordnung von zwei parallel zueinander ausgerichteten Achsen platziert sind. Mit anderen Worten sind an dem Transportwagen zunächst entlang einer ersten Achse zwei Räder angeordnet, in einem versetzten Abstand entlang einer zweiten Achse wiederum zwei weitere Räder. Wenn hier von Anordnung von Rädern entlang einer Achse die Rede ist, so bedeutet dies nicht, dass die Räder auf einer tatsächlichen gemeinsamen Achse aufgebracht sind, die Räder können vielmehr, und sind dies insbesondere, wie nachstehende Beschreibung erläutert, auch einzeln aufgehängt sein. Weiterhin ist für diese erfindungswesentlichen Gestaltung wichtig, dass die Räder der ersten Achse angetrieben, die Räder der zweiten Achse hingegen nicht angetrieben sind und dass dabei die Räder der angetriebenen Achse jeweils mit einem eigenen elektromotorischen Antrieb verbunden und über diesen jeweils mit von der Steuerung individuell vorgebbarer Rotationsgeschwindigkeit antreibbar sind. Schließlich ist für diese erfindungsgemäße Ausgestaltung des Transportsystems wichtig, dass entlang der Fahrwege in der Transportbahn Längsnuten geführt sind und dass an dem wenigstens einen Transportwagen ein unterseitig vorstehender, zum Eingriff in die Längsnuten ausgebildeter Führungsvorsprung gebildet ist. Insbesondere kann vorteilhafterweise je Fahrweg jeweils eine einzige Längsnut vorgesehen sein.

Diese erfindungsgemäße Ausgestaltung des hier vorgestellten Transportsystems ermöglicht einen besonderen Vorteil im Aufbau der Transportbahn. Denn insbesondere dort, wo es Abzweigungen bzw. Zusammenführungen von Fahrwegen in der Transportbahn gibt, zum Beispiel um von einer im Rund geführten Hauptbahn eine Probe in Richtung eines Analysegeräts zu verfahren, kann aufgrund der erfindungsgemäßen Ausgestaltung des Transportwagens in dem Transportsystem ein Überführen in den Abzweig bzw. ein Weiterführen des Transportwagens auf der Hauptstrecke ohne das Erfordernis einer Weichenschaltung in der Transportbahn erhalten werden. Allein aufgrund einer Einstellung unterschiedlicher Antriebsgeschwindigkeiten der angetriebenen Räder, die insbesondere auf einer in Fahrtrichtung des Transportwagens hinten gelegenen Achse angeordnet sein können, kann hier entweder eine nach links oder nach rechts weisende Fahrtrichtungsvorgabe unternommen werden, sodass dann, wenn eine entsprechende Einstellung der unterschiedlichen Antriebsgeschwindigkeiten entsprechend räumlich angepasst vor dem Abzweig erfolgt, der Führungsvorsprung in den fortgeführten Verlauf der Längsnut entlang einer Hauptfahrstrecke oder aber entlang des Abzweigs überführt wird, der Transportwagen dann entsprechend weiter entlang der Hauptfahrstrecke, bzw. des Hauptweges verfährt oder aber in den Abzweig einbiegt. Es können dabei, wie bereits erwähnt, in der Transportbahn selbst entlang der Fahrwege Weichen oder andere Verstellmechanismen entfallen, die aufgrund ihrer mechanisch bewegbaren Teile und häufig ausgeführten Bewegungen anfällig sind für Defekte und Ausfälle.

Wenn aber, was bei bekannten Transportsystemen der eingangs genannten Art durchaus des Öfteren vorkommen kann, ein entsprechendes Bauteil der Transportbahn ausfällt und ersetzt werden muss, führt dies nicht selten zu einem Ausfall jedenfalls größerer Teilbereiche des Analyselabors mit einem entsprechenden Rückstau der Proben, einem Durchsatz- und damit auch Umsatzausfall. Bei der erfindungsgemäßen Lösung wird die für ein Vorgeben der Fahrtrichtung an Abzweigen erforderliche Technik hinsichtlich der für diese Fahrtrichtungsvorgabe notwendigen mechanischen Einstellung und Verstellbarkeit ausschließlich auf den Transportwagen übertragen, der im Fall eines Ausfalls problemlos aus dem Transportsystem herausgenommen und gegebenenfalls durch einen Ersatzwagen ersetzt werden kann. Das Transportsystem selbst fällt dabei nicht aus, dass Analyselabors kann normal weiterarbeiten.

Ein weiterer Aspekt der Erfindung, der insbesondere auch unabhängig von der besonderen Ausgestaltung des Transportwagens mit vier Rädern und dem Führungsvorsprung und der Transportbahn mit Längsnut bei einem erfindungsgemäßen Transportsystem zum Einsatz kommen kann, besteht darin, dass der elektrische Energiespeicher durch einen oder mehrere Kondensatoren gebildet ist. Bei bekannten Transportsystemen sind die Transportwagen mit Akkumulatoren, sogenannten Akkus, ausgestattet. Diese haben zwar den Vorteil, dass sie recht große Mengen elektrischer Energie speichern und somit vergleichsweise lange Fahrzeiten bzw. Betriebszeiten der Transportwagen ermöglichen können. Allerdings sind solche Akkus auch vergleichsweise schwer und bringen zusätzliches Gewicht in die Transportwagen, was einerseits den Energieverbrauch heraufsetzt, andererseits auch für die Dynamik der Transportwagen Einschränkungen mit sich bringt. Zudem erfordern derartige Akkus vergleichsweise große Ladezeiten, sodass in bekannten Transportsystemen, die mit Transportwagen mit Akkus als Energiespeicher arbeiten, entsprechende Ladestationen vorzusehen sind, in denen stets ein Teil der Transportwagenflotte zum Aufladen der Akkus abgestellt ist. Diese Transportwagen können dabei nicht an dem eigentlichen Transport der Proben teilhaben, sodass bei Bestückung des Transportsystems eine entsprechende zusätzliche Anzahl von Transportwagen mit einzusetzen ist, um den durch den Ladevorgang ausfallenden Anteil der Flotte mit zu berücksichtigen.

Hinzu kommt, dass Akkus über eine Zeitdauer ihrer Nutzung in ihrer Ladekapazität nachlassen, sodass diese nach einer bestimmten Betriebsdauer entweder auszutauschen sind oder aber dass die gesamten Transportwagen zu ersetzen sind. Auch dies führt zu einem weiteren Wartungsaufwand und damit verbundenen Kosten.

Demgegenüber sind elektrische Kondensatoren als elektrische Energiespeicher vorteilhaft. Sie können vergleichsweise leichtgewichtig gebaut werden und erlauben im Vergleich zu Akkus eine nahezu unbegrenzte Zahl von Lade- und Entladungszyklen, haben also eine erhöhte Lebensdauer. Sie können darüber hinaus mit vergleichsweise hohen Strömen und/oder mit Hilfe von, insbesondere durch die Verwendbarkeit von vergleichsweise hohen Strömen bedingt, kurzen Ladevorgängen, die insbesondere während des Betriebs des Transportwagens unternommen werden können, aufgeladen werden. Der Nachteil von Kondensatoren, dass diese nur eine begrenzte Ladungsmenge und damit beschränkte Menge elektrischer Energie speichern können, kann durch kürzer getaktete, insbesondere im laufenden Betrieb des Transportwagens vorgesehene Ladevorgänge kompensiert werden. Von besonderem Vorteil ist, wenn hier als Kondensatoren solche mit hoher Kapazität eingesetzt werden, zum Beispiel sogenannte Superkondensatoren, im Englischen auch Supercapacitors oder kurz Supercaps genannt.

Insbesondere für eine wie vorstehend bezeichnete Ausstattung der Transportwagen mit Kondensatoren als Energiespeicher kann es von Vorteil sein, dass in der Transportbahn und entlang der Fahrwege abschnittsweise Ladestrecken vorgesehen sind zum Übertragen von elektrischer Ladung auf den Transportwagen zum Aufladen des elektrischen Energiespeicher während einer Überfahrt einer Ladestrecke. Gerade dann, wenn als Energiespeicher zum Speichern der elektrischen Energie Kondensatoren eingesetzt werden, die im Vergleich zu Akkus nur geringe Mengen elektrischer Energie speichern können, können solche Ladestrecken im Betrieb ein stetiges und getaktetes Auffüllen der elektrischen Energie gewährleisten. Dabei sind die Längen und Positionen der Ladestrecken unter Berücksichtigung der Überfahrgeschwindigkeiten so abzustimmen, dass die elektrischen Kondensatoren oder andere elektrische Energiespeicher jedenfalls insoweit hinreichend aufgeladen werden mit elektrischer Energie, um eine anschließende Wegstrecke bis zu einer erneuten in der Transportbahn angeordneten Ladestrecke sicher zu überbrücken, also in einer solchen Weise, dass noch eine ausreichende Restladung bzw. Restmenge elektrischer Energie in dem elektrischen Energiespeicher vorhanden ist, wenn der Transportwagen die nächste Ladestrecken zum Auffüllen der elektrischen Energie erreicht.

Die elektrische Energie kann in der Ladestrecke auf unterschiedliche Weisen übertragen werden, zum Beispiel drahtlos, aber auch infolge eines mechanisch hergestellten elektrischen Kontakts. Letztere Möglichkeit ist von Vorteil, da diese eine einfache und robuste Lösung darstellt, bei der auch mit kurzer Kontaktzeit vergleichsweise große Mengen elektrischer Energie übertragen werden können. Zudem birgt eine mechanische elektrische Übertragung von Energie nicht die Gefahr eines Übersprechens oder Störens von Funksignalen, die zum Beispiel für die Kommunikation innerhalb des Transportsystems eingesetzt werden können. Entsprechend können, gemäß einer vorteilhaften Weiterentwicklung des erfindungsgemäßen Transportsystems, in den Ladestrecken entlang des Fahrwegs Leiterbahnen verlaufen, insbesondere solche aus Kupfer, und kann der wenigstens eine Transportwagen mit diesen Leiterbahnen in Kontakt bringbare Schleif- oder Rollkontakte aufweisen. Entsprechend wird dann, wenn der Transportwagen die Ladestrecken überfährt, durch den Kontakt zwischen den Leiterbahnen und den Schleif- oder Rollkontakten eine elektrische Verbindung hergestellt und wird elektrische Energie auf den Transportwagen übertragen zum Speichern in dem elektrischen Energiespeicher, zum Beispiel dem wie vorstehend beschriebenen Kondensator bzw. den Kondensatoren.

Mit Vorteil können die vorstehend bezeichneten Schleif- oder Rollkontakte an dem Transportwagen federnd gelagert und in eine Position vorgespannt sein, in der sie von der Transportbahn abgehoben sind, und es kann vorgesehen sein, dass im Bereich der Ladestrecken durch Magnetkraft die Schleif- oder Rollkontakte entgegen der Federspannung an die Leiterbahnen gezogen und in einen mechanischen und dadurch auch elektrischen Kontakt gebracht werden. Diese Magnetkraft wird dabei insbesondere dadurch erhalten, dass jedenfalls in einem der Elemente Leiterbahnen oder Schleif- oder Rollkontakte ein Magnet, in dem anderen der Elemente entweder ein Magnet oder ein magnetisierbares Material vorgesehen ist. Insbesondere kann im Bereich der Leiterbahnen ein magnetisierbares Material, zum Beispiel zusätzlich zu einer Kupferschiene eine Eisen- oder Edelstahlschiene, vorgesehen sein und können an den federgelagerten Schleif- oder Rollkontakten Permanentmagnete angeordnet sein. Durch diese Ausgestaltung wird verhindert, dass die Schleif- oder Rollkontakte permanent auf der Transportbahn schleifen und dadurch zusätzliche Reibung erzeugen. Ein mechanischer Kontakt und eine damit einhergehende Reibung ist dann nur in denjenigen Abschnitten gegeben, in denen tatsächlich eine Ladungsübertragung zum Auffüllen des elektrischen Energiespeicher erfolgt.

Ein weiterer besonderer Aspekt des erfindungsgemäßen Transportsystems, der auch unabhängig von der vierrädrigen Ausgestaltung des Transportwagens und dem Vorsehen von Führungsvorsprung an Transportwagen und Längsnuten in der Transportbahn und auch unabhängig von der Ausgestaltung des Energiespeichers als Kondensator bzw. Kondensatoren umgesetzt werden kann, besteht darin, dass zum Ausbilden einer bidirektionalen Kommunikation mit dem Transportwagen erste optische, insbesondere Infrarot-, Kommunikationsschnittstellen in der Transportbahn integriert und im Bereich des Fahrweges angeordnet sein können und dass zweite optische, insbesondere Infrarot-, Kommunikationsschnittstellen auf dem Transportwagen angeordnet sind. Dabei sind die ersten und zweiten optischen Kommunikationsschnittstellen so angeordnet, dass sie bei einem Überfahren des Transportwagens in einem Bereich mit dort angeordneter erster optischer Kommunikationsschnittstelle zusammenwirken. Dabei können die in der Transportbahn angeordneten ersten optischen Kommunikationsschnittstellen insbesondere langgestreckt ausgebildet sein, zum Beispiel mit mehreren gleichgeschalteten Leucht- oder Laserdioden, sodass über ein Zeitfenster während einer Überfahrt eine Kommunikationsverbindung, insbesondere bidirektionaler Art, aufrechterhalten werden kann. Über solche Kommunikationsschnittstellen können insbesondere dem Transportwagen, genauer dessen Steuerung, Fahrbefehle übermittelt werden, beispielsweise im Bereich vor einer Abzweigung in der Transportbahn im Hinblick auf eine einzuschlagende Fahrtrichtung entlang der Hauptroute oder überführend in den Abzweig. Andersherum in Richtung der Transportbahn, und von dort weiter zum Beispiel zu einer zentralen Steuerung, übermittelt werden können beispielsweise Identifikationsdaten, die den Transportwagen eindeutig bestimmen lassen, der gerade die erste Kommunikationsstelle in der Transportbahn passiert. Eine solche optische Kommunikation ist von Vorteil, da sie räumlich sehr begrenzt aufgebaut werden kann und damit insbesondere dann, wenn mehrere solche erste Kommunikationsschnittstellen in der Transportbahn angeordnet sind, es nicht zu Überschneidungen kommen kann, wie dies bei Funkkommunikation gegebenenfalls zu befürchten steht. Zudem kann eine optische Kommunikation, insbesondere eine Infrarotkommunikation in der Transportbahn auch geschützt und abgedeckt durch eine für die entsprechende Lichtwellenlänge durchlässige Abdeckung angeordnet werden, was sie robust und unanfällig macht gegenüber zum Beispiel Abriebpartikeln, Staub, Feuchtigkeit oder dergleichen.

Ein weiterer Aspekt des erfindungsgemäßen Transportsystems, der in Kombination mit den vorstehend beschriebenen Besonderheiten, aber auch eigenständig umgesetzt werden kann, besteht in einem in den Transportwagen angeordneten und mit der Steuerung verbunden, mit einem Messbereich in Fahrtrichtung des Transportwagens nach vorn weisenden Abstandssensor, der vorgesehen sein kann. Dabei ist dann die Steuerung in einer solchen Weise eingerichtet, bei einem von dem Abstandssensor erkannten und unterhalb eines vorgegebenen Schwellwertes liegenden Hindernis die Fahrtgeschwindigkeit des Transportwagens zu verringern und/oder bei einem bewegten Hindernis die Fahrgeschwindigkeit des Transportwagens zum Einhalten eines gleichbleibend eingehaltenen Mindestabstandes anzupassen. Über eine solche Ausgestaltung kann zum Beispiel eine Kolonnenfahrt mehrerer Transportwagen mit einheitlicher Geschwindigkeit automatisch realisiert werden. Es kann auch verhindert werden, dass der Transportwagen auf ein stehendes Hindernis ungebremst aufläuft und mit diesem kollidiert.

Gemäß Anspruch 1 weist der Transportwagen an einer im Betrieb in Fahrtrichtung nach vorn weisenden Seite einen Tastschalter auf, dessen Betätigung eine elektrische Hauptversorgungsleitung zwischen dem elektrischen Energiespeicher und in dem Transportwagen angeordneten elektrischen Verbrauchern unterbricht. Durch eine solche Ausgestaltung kann dann, wenn der Transportwagen insbesondere durch ein gezieltes Auffahren auf ein Hindernis, zum Beispiel auf einen der vorstehenden Transportwagen oder einen Prellbock oder dergleichen, an einem Hindernis anschlägt, durch die Trennung des elektrischen Speichers von sämtlichen in dem Transportwagen angeordneten elektrischen Verbrauchern, also ein vollständiges Abschalten der Systeme des Transportwagens, erreicht werden, dass der Energieverbrauch in dem Transportwagen auf ein Minimum reduziert ist, im Idealfall auf null.

Gerade dann, wenn der elektrische Energiespeicher ein solcher ist, der nur ein begrenztes Maß an elektrischer Energie aufzunehmen vermag, zum Beispiel ein Kondensator oder eine Anordnung aus Kondensatoren, kann so verhindert werden, dass im Falle eines Stehenbleibens des Transportwagens durch ein Aufrechterhalten der elektrischen Funktionen und ein Weiterführen der elektrischen Energieverbräuche der elektrische Energiespeicher entleert wird, sodass beim Auflösen des Halts im schlimmsten Fall keine Energie mehr vorhanden ist, um den Transportwagen weiter zu bewegen, also diesen zu verfahren. Dadurch, dass hier ein Tastschalter verwendet wird, ist dieser in eine Einschaltstellung vorgespannt, sodass beim Auflösen des Hindernisses der Tastschalter wieder in die Einschaltstellung verfährt, somit die Verbindung zwischen dem elektrischen Energiespeicher und den Verbrauchern auf dem Transportwagen wiederhergestellt wird, sodass dann der Transportwagen wieder in vollem Umfang betrieben und insbesondere selbstfahrend sich fortbewegen kann.

Sofern die Transportbahn, wie in dem ersten Aspekt der Erfindung vorgeschlagen, mit entlang der Fahrwege verlaufenden Längsnuten versehen ist, kann der Tastschalter insbesondere einen zum Eingriff in die Längsnut vorgesehenen, nach unten weisenden Vorsprung aufweisen. Mit einem solchen kann er dann beispielsweise an einer entsprechenden Struktur in der Längsnut anschlagen und auslösen, wenn dadurch ein Halt des Transportwagens erhalten werden soll. Hierzu kann zum Beispiel dem Transportwagen zuvor über eine Kommunikationsverbindung eine Reduzierung der Fahrtgeschwindigkeit aufgegeben werden, genauer seiner Steuerung, sodass ein Auffahren auf einen solchen Halt nicht mit einer überhöhten Geschwindigkeit erfolgt, die die auf dem Transportwagen befindliche Probe gefährden könnte.

In einem weiteren eigenständigen Aspekt der Erfindung kann vorgesehen sein, dass in der Transportbahn des Transportsystems an vorgesehenen Haltepositionen Stopper angeordnet sind, wobei die Stopper entweder aus der Ebene der Transportbahn zum Hineinragen in den Fahrweg und zum Anschlagen an den Transportwagen nach oben herausfahrbar oder, sofern eine Längsnut vorgesehen ist, in diese Längsnut einbringbar gebildet sind. Hierdurch können an vorgesehenen Haltepositionen Transportwagen angehalten werden, zum Beispiel in einer Warteposition vor dem Einfahren in den Bereich eines Analysegeräts, sofern dort mehr als ein Transportwagen mit einer Probe anlangt und eine frühere Probe noch nicht fertig analysiert ist, ein entsprechender Transportwagen die Halteposition an dem Analysegerät noch blockiert.

Sofern der Transportwagen einen Führungsvorsprung aufweist zum Eingriff in eine den Fahrweg definierende Längsnut, so kann an dem Führungsvorsprung ein Kontaktring gebildet sein, der über ein Wälzlager gelagert ist und seitliche Begrenzungen der Längsnut kontaktieren kann. Das Wälzlager kann zum Beispiel ein Kugellager sein, aber auch ein Nadellager oder eine andere Art von Wälzlager. Durch eine solche Anordnung mit einem Wälzlager wird noch einmal eine Reduktion der Reibung erhalten, die entsteht, wenn der Führungsvorsprung an einer Wand der Längsnut, insbesondere bei höheren Geschwindigkeiten, entlanggeführt wird. Dies hilft zudem beim Einsparen elektrischer Energie, was insbesondere dann relevant ist, wenn der Energiespeicher ein solcher ist, der vergleichsweise geringe Mengen elektrischer Energie zu speichern vermag.

Aus ähnlichen Beweggründen kann an dem Transportwagen im Bereich von im Betrieb in Fahrtrichtung gesehen hinten gelegenen seitlichen Ecken jeweils ein über ein Wälzlager gelagerter, seitlich vorstehender Rollring vorgesehen sein. Durch diesen kann insbesondere dort, wo aufgrund von Kurven mit geringen Radien aus Sicherheitsgründen seitliche wandartige Leitstrukturen entlang des Fahrweges angeordnet sind, einen Führungskontakt zwischen dem Transportwagen und dieser Leitstruktur hergestellt werden, ohne dabei übermäßige Reibungsverluste zu erhalten, insbesondere zum Abfangen von Seitenkräften oder Zentrifugalkraft, insbesondere bei höheren Geschwindigkeiten.

Auch kann, beispielsweise in dem Führungsvorsprung, so denn der Transportwagen einen solchen zum Eingriff in eine den Fahrweg definierende Längsnut aufweist, ein Magnet angeordnet sein. Ein solcher Magnet kann beispielsweise dazu dienen, beim Überfahren eines für Magnetfelder empfindlichen Sensors, insbesondere Hallsensors, in der Fahrbahn, insbesondere unterhalb der Längsnut, Steuerungselemente und/oder etwaige an vorgesehenen Haltepositionen befindliche Stopper zu aktivieren. Auch kann mittels eines solchen Magneten die Anwesenheit des Transportwagens im Bereich eines Sensors angezeigt und/oder erkannt werden, kann der Magnet insofern zur Lokalisierung des Transportwagens genutzt werden. Insbesondere kann ein solcher Magnet innerhalb der Befestigung eines etwaig vorgesehenen Wälzlagers, insbesondere Kugellagers, insbesondere in einem Führungsstift des Wälzlagers, insbesondere Kugellagers, angeordnet sein, in diese(s) integriert sein und/oder diese(n) ausbilden, kann der Magnet dabei ferner insbesondere mit dem Wälzlager, insbesondere Kugellager unterseitig bündig abschließen.

Die Aufnahme, die erfindungsgemäß auf dem Transportwagen angeordnet ist, kann insbesondere eine einen Boden aufweisende Aufnahmeröhre sein. In eine solche kann insbesondere ein zylinderrohrförmiges Probengefäß eingestellt werden. Mit Vorteil kann diese Aufnahmeröhre in ihrer umlaufenden Seitenwand einen Längsausschnitt aufweisen, der es dann insbesondere erlaubt, eine auf dem Probengefäß angeordnete Kodierung, zum Beispiel einen Barcode, mit einem seitlich angeordneten Lesegerät durch diesen Längsausschnitt hindurch auszulesen.

Ein weiterer Aspekt des erfindungsgemäßen Transportsystems, der wiederum auch eigenständig einen erfinderischen Charakter aufweist, ist durch den Vorschlag gegeben, der an dem Transportwagen vorgesehenen Aufnahme für die zu transportierende Probe einen an dem Transportwagen ausgebildeten Halter für eine zu der Probe gehörige Verschlusskappe zuzuordnen. Typischerweise werden nämlich die Proben, genauer die Probengefäße, geöffnet transportiert, damit an den jeweiligen Analysestationen Probeninhalte ohne weiteres entnommen werden können. Da die Proben, beziehungsweise Probengefäße, am Ende des Durchlaufs durch das medizinische Analyselabor in der Regel einem Archiv zugeführt werden, in dem sie verschlossen aufzubewahren sind, müssen sie entsprechend wieder verschlossen werden mit einer Verschlusskappe. Idealerweise kann dafür die originäre Verschlusskappe verwendet werden, zumal es, wie vorstehend in der Beschreibungsanleitung erläutert, unterschiedliche Verschlusskappen gibt, die nicht nur farbig unterschiedlich sein können, sondern auch hinsichtlich ihrer Größe und auch Funktion verschieden sind, zum Beispiel da unterschiedliche Anbieter von Probengefäßen verschiedene eigene Standards einsetzen.

Durch den vorstehend erläuterten Vorschlag können dann Probengefäße und zugehörige Verschlusskappen während des Durchlaufs durch das medizinische Analyselabor entlang des erfindungsgemäßen Transportsystems als zusammengehörig gepaart erhalten werden, sodass die Probe am Ende ihres Weges wieder sicher und fest verschlossen werden kann mit der ihr zugehörigen Verschlusskappe. Zudem lassen sich dann Ersatzstopfen einsparen, die im bisherigen Probenmanagement in medizinischen Analyselabors häufig eingesetzt sind, mit den zugehörigen negativen Folgen hinsichtlich Ressourcenverbrauchs und Umweltbelastung bei der Entsorgung. Der Halter für die Verschlusskappe kann zum Beispiel, wenn die Aufnahme für die zu transportierende Probe wie vorstehend beschrieben als Aufnahmeröhre ausgebildet ist, als eine Art auskragende Ablage am Rand der Aufnahmeröhre angeformt sein.

Ein weiterer für sich eigenständig eine Erfindung begründender Aspekt des hier beschriebenen Transportsystems besteht darin, dass an dem Transportwagen ein nach unten weisender optischer Abtastsensor angeordnet sein kann, mit dem eine Bewegungsrichtung und eine Bewegungsgeschwindigkeit des Transportwagens relativ zu der Transportbahn erfasst werden können. Ein solcher optischer Abtastsensor kann zum Beispiel entsprechend gebildet sein, wie die bei optischen Computermäusen bekannten Optiksensoren, mit denen ebenfalls Bewegungsrichtungen und Geschwindigkeiten des Mausgehäuses erfasst werden können. Das Anordnen eines solchen Abtastsensors an dem Transportwagen ermöglicht es, dessen Fahrtgeschwindigkeit und auch Bewegungsrichtung, insbesondere auch entlang gekrümmter Bahnen, also in Kurvenfahrten, zu erfassen und der Steuerung entsprechende Bewegungsdaten zu übermitteln, die bei der Einstellung der Fahrtgeschwindigkeiten des Transportwagens mitberücksichtigt werden können. Auf diese Weise kann zum Beispiel ein zu schnelles Fahren verhindert werden, können überhöhte Geschwindigkeiten in Kurvenfahrten vermieden werden, die ansonsten zu einem möglichen fliehkraftbedingten Auskippen, Umfallen oder Überlaufen der Probe führen könnten.

Ein erfindungsgemäßes Transportsystem kann weiterhin eine in wenigstens zwei horizontal übereinander angeordneten Ebenen gebildete Transportbahn aufweisen, wobei dann Rampenabschnitte vorgesehen sind, die die übereinander angeordneten Ebenen miteinander verbinden, sodass der Transportwagen entlang der Rampenabschnitte zwischen den Ebenen verbracht, also von einer unteren auf eine obere Ebene oder umgekehrt fahren kann. Eine solche Anordnung erlaubt ein hinsichtlich der benötigten Grundfläche platzsparendes Ausbilden des Transportsystems, insbesondere der Transportbahn. Um solche Rampenabschnitte mit einer gewissen Steigung ausbilden zu können und dennoch eine ausreichende Andruckkraft des Transportwagens auf die Bahnoberfläche zu erhalten, kann vorgesehen sein, dass im Bereich der Rampenabschnitte entlang des Fahrweges eine magnetische Kopplung zwischen dem Transportwagen und dem Fahrweg erhalten wird, indem entlang des Fahrweges und an dem Transportwagen wenigstens ein Magnet, im Übrigen magnetisierbares Material angeordnet wird. Sofern eine Ausgestaltung mit Ladestrecken und entgegen einer Federvorspannung in eine ausgestellte Position mittels Magnetkraft bewegbarer Schleif- oder Rollkontakte vorgesehen ist, können diese Magnetbindungen im Bereich der Rampenabschnitte für ein Besorgen des Halts des Transportwagens auf dem Untergrund eingesetzt werden. Dazu können im Bereich der Rampenabschnitte dann insbesondere Ladestrecken ausgebildet sein.

Alle beschriebenen Vorteile eines erfindungsgemäßen Transportsystem für den Transport von Proben in einem medizinischen Analyselabor haben gleichermaßen Gültigkeit für ein entsprechendes Transportsystem für den Transport von Proben in einem chemischen Analyselabor, sind insofern dahingehend übertragbar.

Weitere Merkmale und Vorteile der Erfindung und der in dem hier offenbarten Transportsystem umfassten technischen Lösungen und Besonderheiten ergeben sich aus den nachfolgenden Erläuterungen möglicher Ausgestaltungen anhand der beigefügten Figuren. Dabei zeigen:
- Fig. 1: schematisch als Bestandteile einer möglichen Ausführungsform eines erfindungsgemäßen Transportsystems einen erfindungsgemäßen Transportwagen angeordnet auf einer erfindungsgemäßen Transportbahn;
- Fig. 2: einen erfindungsgemäßen Transportwagen eines erfindungsgemäßen Transportsystems aus Fig. 1 in einer Schrägansicht;

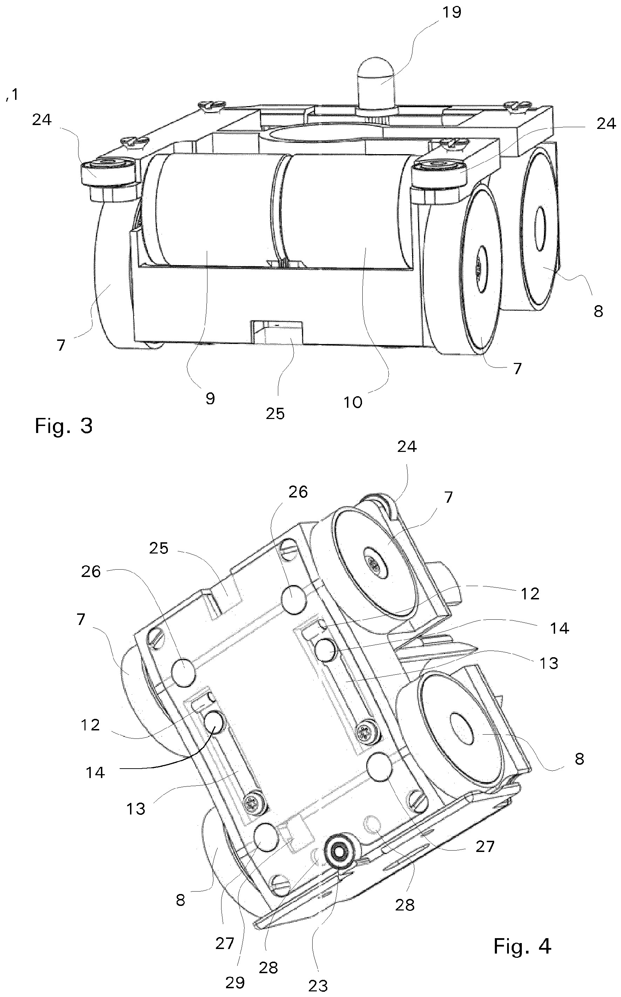

- Fig. 3: den Transportwagen aus Fig. 2 ohne eine Abdeckung und in einer Ansicht von hinten; und
- Fig. 4: eine Ansicht auf die Unterseite des Transportwagens aus Fig. 1.

In den Figuren ist eine mögliche Ausgestaltungsvariante eines erfindungsgemäßen Transportsystems veranschaulicht, in der verschiedene, auch unabhängig voneinander realisierbare und erfinderische Aspekte umgesetzt sind. Insoweit ist die nachfolgende Beschreibung dieser Ausführungsvariante so zu verstehen, dass die verschiedenen Besonderheiten und Aspekte auch unabhängig voneinander umgesetzt werden können, dass also im Rahmen der Erfindung auch einzelne Merkmale oder Merkmalskombinationen einen erfinderischen Beitrag liefern und im Rahmen einer neuen und erfinderischen Ausgestaltung eines Transportsystems oder auch einzelner Bestandteile davon, wie der Transportbahn oder auch des Transportwagens umgesetzt werden können.

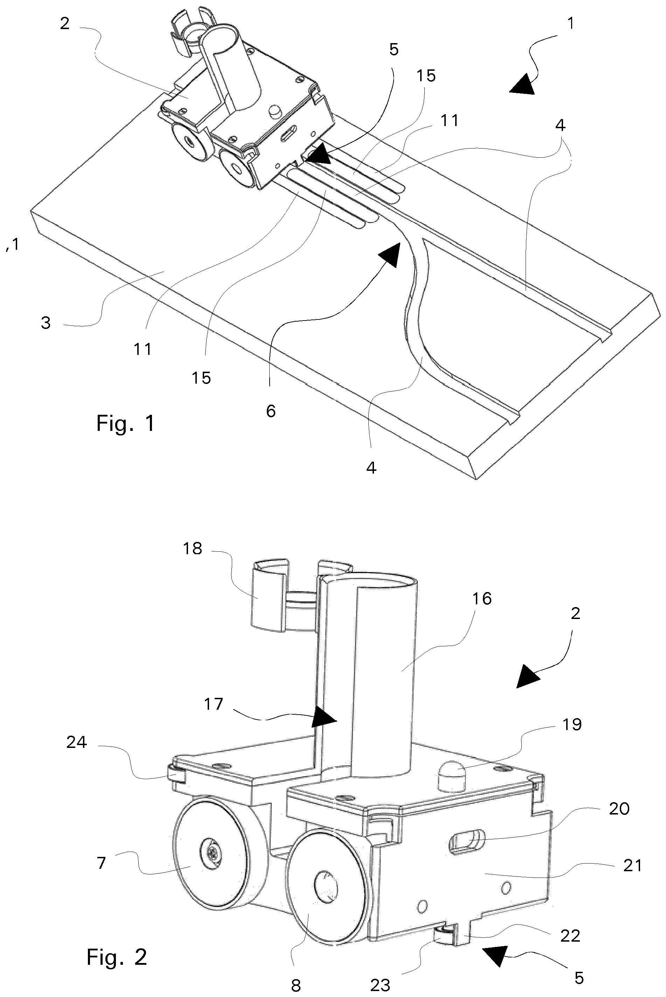

Ein erfindungsgemäßes Transportsystem, das auch als Fördersystem beschrieben werden kann, ist in der Fig. 1 veranschaulicht und dort allgemein mit dem Bezugszeichen 1 gekennzeichnet.

Das Transport- oder Fördersystem 1 ist für den Einsatz in einem medizinischen Analyselabor und dort für den Transport von Proben vorgesehen. Es stellt den Teil der Laboreinrichtung dar, der Proben aus einer Vorsortierung, z.B. einem automatischen Sortiergerät, übernimmt und an beliebige, dem System vorgebbare Ziele in der Laboreinrichtung fördert. Dies können z.B. Vorbereitungsgeräte, wie Zentrifugen, Analysegeräte oder auch ein Archiv sein. Es besteht auch die Möglichkeit des Zubringens von Proben zu einem Sorterplatz zum Zwecke einer weiteren Sortierung.

Das Transportsystem 1 umfasst wenigstens einen, in der Praxis eine Vielzahl von, einzelnen, selbstfahrenden Transportwagen 2, die auch als Probenträger bezeichnet werden können und die jeweils für die Aufnahme genau nur einer Probe vorgesehen sind und die dazu dienen, die darin aufgenommene Probe an ein vorbestimmtes Ziel zu bringen. Die Proben sind dabei in Form von die eigentlich zu analysierende medizinische Probe, wie Blut, Urin oder dergleichen enthaltende röhrchenförmige Probengefäße gebildet, wie sie in der medizinischen Labortechnik bekannt und seit langem im Einsatz sind. An dem jeweiligen Zielort können die Proben mit einem Pick-and-place-Mechanismus entnommen und z.B. für deren Weiterverarbeitung in geeignete Racks oder Aufnahmen eingesetzt werden.

Weiterer Bestandteil des Transportsystems 1 ist neben dem wenigstens einen Transportwagen 2 eine Transportbahn 3. Diese Transportbahn 3 bildet eine ebene Unterlage, auf der der oder die Transportwagen 2 sich fortbewegen. Die Transportbahn 3 dient insoweit für den oder die Transportwagen 2 als Fahrbahn. In der Transportbahn sind zur Führung des Transportwagens 2, bzw. der Transportwagen 2 auf vorgegebenen Fahrwegen Längsnuten 4 eingebracht, die als Führungsnuten dienen und in die der Transportwagen 2 mit einem Führungsvorsprung 5 eintaucht. Die Längsnuten 4 teilen sich an Abzweigen 6 auf, so dass dort getrennte Fahrwege abzweigen, denen der jeweilige Transportwagen 2 wahlweise folgen kann. Die in einem Abzweig 6 geteilten Längsnuten 4 laufen an einer anderen Stelle wiederum zusammen und vereinigen sich wieder (hier nicht gezeigt). So sind in der Transportbahn 3 des erfindungsgemäßen Transportsystems 1 die jeweiligen, durch die Längsnuten 4 markierten und vorgegebenen Fahrwege stets geschlossen gebildet, gleichermaßen als Rundwege oder auch - nicht im streng geometrischen Sinne - kreisförmig. Dadurch kann ein Transportwagen 2, der etwa an einem Abzweig 6 aufgrund eines Rückstaus dort noch nicht in die Zielstrecke überführt werden kann, in einer Kreisfahrt weiterfahren, bis der Abzweig bei einer nächsten Ankunft dort für eine Einfahrt frei ist. Die Transportbahn 2 kann insbesondere auch auf unterschiedlichen, übereinander liegenden Ebenen ausgebildet sein, wobei dann Rampenabschnitte vorgesehen sind, die die Ebenen miteinander verbinden und in denen in der hier gezeigten Ausführungsform dann durch Längsnuten 4 Fahrwege vorgegeben sind.

Der Transportwagen 2 in dem erfindungsgemäßen Transportsystem 1 in der gezeigten Ausführungsform hat im Gegensatz zu Probenträgern in anderen, ähnlichen Systemen, die teilweise gleitend über die Fahrbahn geschoben werden, vier Räder 7, 8. Die Räder 7, 8 sind in zwei Achsen angeordnet, einer Achse mit den Rädern 7 und einer Achse mit dem Rädern 8. In den Achsen sind die Räder 7, 8 allerdings jeweils einzeln und nicht gekoppelt aufgehängt. Weiter verfügen die Räder 7, 8 jeweils über eine Auflage oder einen Reifen, also über Strukturen, die einerseits zur Verbesserung der Haftung auf der Transportbahn 3 beitragen und die weiterhin einen geräuschlosen Betrieb ermöglichen. Die Räder 7 bilden dabei die in Fahrtrichtung des Transportwagens 2 hinten liegenden Räder, also die Hinterräder. Die Räder 8 sind entsprechend als Vorderräder zu sehen.

Der Transportwagen 2 wird von zwei Gleichstrommotoren 9, 10 angetrieben, die jeweils direkt eines der Räder 7 antreiben. Die Räder 8 sind hingegen freilaufend aufgehängt. Die Gleichstrommotoren 9, 10 sind dabei getrennt regelbar, so dass die Antriebsgeschwindigkeiten, bzw. die Drehzahlen der beiden Räder 7 unabhängig voneinander eingestellt werden können. Hierzu sind die Gleichstrommotoren 9, 10 mit einer auf dem Transportwagen angeordneten Steuerung (in den Figuren nicht dargestellt) verbunden, die den Betrieb des jeweiligen Motors 9, 10 steuert und vorgibt. Beide Gleichstrommotoren 9, 10 entfalten eine hohe Dynamik und ein hohes Drehmoment, das für die Bewältigung von Steigungen, etwa beim Befahren der verschiedene Ebenen der Transportbahn 2 verbindenden Rampen, und für das Fahren mit hoher Geschwindigkeit von großem Vorteil ist. Ein weiterer Vorteil ist die getrennte Regelbarkeit der Motoren 9, 10. Diese ermöglicht beispielsweise in Kurven die Anpassung der Geschwindigkeiten zwischen innerem und äußerem Rad 7 und ersetzt damit ein ansonsten vorzusehendes Differential, spart also ein mechanisches Teil ein, das verschleißanfällig ist. Eine weitere wichtige Funktion des hier gewählten Antriebs mit zwei getrennten Motoren 9, 10 ist der Ersatz mechanischer Weichensteuerungen an Abzweigen 6 in der Fahrbahn durch eine einfach umzusetzende Softwaresteuerung im Transportwagen 2. Durch diese Steuerung wird die Auswahl der in dem Abzweig 6 einzuschlagenden Richtung der Weiterfahrt, anstelle durch eine Schaltung einer Weiche in der Fahrtstrecke, durch Vorgabe unterschiedlicher Geschwindigkeiten der angetriebenen Räder 7 bewerkstelligt wird. Wenn dabei der Transportwagen 2 an dem Abzweig 6 in die rechte Spur einschwenken soll, werden die Gleichstrommotoren 9, 10 so angesteuert, dass entsprechend das linke hintere Rad 7 ein höheres Drehmoment entwickelt, um den Führungsvorsprung 6 dadurch nach rechts zu drängen und in die an dem Abzweig 6 rechts abzweigende Längsnut 4 zu zwingen. Alternativ kann auch ein Abbremsen des rechten Rades zu demselben Ergebnis führen. Auf diese Weise kann insbesondere ein hoher Aufwand an mechanischen Steuerungen von Weichen in der Transportbahn 3 eingespart werden, mit gleichzeitig deutlicher Verbesserung der Zuverlässigkeit des Systems. Insbesondere reduziert dies die Ausfallquote der Transportbahn 3.

Das Vorsehen von vier Rädern 7, 8 an dem Transportwagen 2 hat gegenüber den bekannten Lösungen den Vorteil, dass die Reibung beim Vortrieb entlang der Transportbahn 3 minimal, idealerweise nahe null ist. Der Energiebedarf für den Vortrieb sinkt dadurch erheblich.

Die Energiespeicherung für den Betrieb der Gleichstrommotoren 9, 10, der elektronischen Steuerung sowie weiterer Verbraucher, so z.B. der nachstehend noch weiter erläuterten Sensorik, wird in der gezeigten Ausgestaltungsform durch elektrische Kondensatoren (in den Figuren nicht gezeigt) realisiert. Bei diesen Kondensatoren kann es sich insbesondere um sogenannte Supercaps handeln, die eine hohe Speicherkapazität aufweisen.

Zwar haben Kondensatoren im Vergleich zu Akkus eine geringere Speicherkapazität. Sie sind jedoch geringer im Gewicht und bei ihnen ist die Zahl der Ladezyklen fast unbegrenzt, insbesondere deutlich höher im Vergleich zu Akkus. Dies führt zu einer deutlich langen Lebensdauer dieser Bauteile und damit der mit diesen ausgerüsteten Transportwagen 2.

Während Akkus eine hohe Ladekapazität aufweisen, also einen vergleichsweise langen Fahrbetrieb eines mit einem Akku ausgestatten Transportwagens ermöglichen, benötigen sie andererseits aber auch lange Ladezeiten, um wieder aufgeladen zu werden. Dies kann nur stationär in einer Ladestation erfolgen, in der ein mit einem Akku ausgerüsteter Transportwagen abgestellt und der Akku dort geladen werden muss. Während der hierfür erforderlichen Rüstzeit steht der Transportwagen dann für einen Probentransport nicht zur Verfügung, so dass in einen Transportsystem mit akkuversorgten Transportwagen eine entsprechend um die Anzahl der im Ladebetrieb befindlichen Transportwagen erhöhte Zahl von Wagen vorzusehen ist. Zudem benötigen die vorzusehenden Ladestationen Platz, der für andere Zwecke dann nicht eingesetzt werden kann.

Die Stromversorgung des Transportwagens 2 erfolgt durch Stromschienen 11, die in abschnittsweise ausgebildeten Ladestrecken in die Transportbahn 3 eingelassen sind, die sich also insbesondere nicht entlang der gesamten Fahrtstrecke erstrecken müssen.

Um einen Kontakt mit den Stromschienen 11 auszubilden, sind an dem Transportwagen 2 unterseitig Kontakte 12 in Form von Schleif- oder Rollkontakten angeordnet, die über die Stromschienen 11 die Kondensatoren mit Strom versorgen. Die Kontakte 12 sind an freien Enden von Federzungen 13 angeordnet, die die Kontakte 12 in einer von der Transportbahn 3 abgehobenen und eingezogenen Ruhestellung halten, die aber durch ihre federnde Eigenschaft nach unten ausgelenkt werden können. Diese Auslenkung wird durch an den Federzungen 13 angeordnete Magnete 14 bewirkt, die von einer unterhalb einer Kupferschicht in der Stromschiene 11 angeordneten Eisenlage angezogen werden. Dadurch werden die Kontaktrollen der Kontakte 12 auf die Stromschiene 11 gedrückt und die Kondensatoren so geladen. Am Ende der Stromschiene 11 endet auch die Eisenlage, so dass sich die Federzungen 13 wieder von der Stromschiene 11, bzw. der Transportbahn 3 wieder abheben. Dieser Kontakt- und Ladevorgang, der bei einem Überfahren der Stromschiene 11 im Normalfall nur Bruchteile von Sekunden andauert, reicht dabei bereits, die Kondensatoren mit ausreichend elektrischer Energie für die Überbrückung von Entfernungen in der Größenordnung mehrerer Meter aufzuladen, sodass nur ein relativ geringer Anteil der Strecken mit Stromschienen 11 bestückt werden muss.

Die vorbeschriebene Lösung mit Kondensatoren als elektrische Energiespeicher in den Transportwagen 2 und einer Aufladung derselben beim Überfahren von Stromschienen 11 über die Kontakte 12 bietet insbesondere folgende Vorteile:
- Die verwendeten hoch kapazitiven Kondensatoren, insbesondere in Form von sog. Supercaps, können hohe Energiemengen auf kleinem Raum speichern, welche Energiemenge für einen Betrieb des Transportwagens 2 entlang einer einige Meter langen Fahrstrecke genügt.
- Die Kondensatoren können sehr schnell, nämlich innerhalb von Bruchteilen von Sekunden geladen werden, so dass die vorzusehenden Abschnitte mit Stromschienen 11 mit kurz Erstreckung bemessen werden können.
- Es wird eine punktuelle Energiezufuhr ermöglicht, die eine ständige Energiezufuhr oder einen stationären Ladebetrieb überflüssig macht. Auf diese Weise laden sich die Transportwagen 2 während des Betriebes auf, sodass eine geringere Anzahl von Transportwagen 2 benötigt und insbesondere ein durchgehender 24/7-Betrieb möglich wird.

In der Transportbahn 3 sind für Infrarotstrahlung transparente Bereiche und darunter angeordnet erste optische Kommunikationsschnittstellen 15 vorgesehen, durch die eine bidirektionale Kommunikation zwischen Steuerelementen in der Transportbahn 3 und dem Transportwagen 2 möglich ist. Entsprechend befinden sich auf der Unterseite des Transportwagens zu den Anordnungen der ersten optischen Kommunikationsschnittstellen 15 passend zweite optische Kommunikationsschnittstellen 28 in Form jeweils einer LED und einer Fotodiode für die bidirektionale Kommunikation mit den Kommunikationsschnittstellen 15 in der Transportbahn 3.

Z.B. können die ersten optischen Kommunikationsschnittstellen 15 in einem Bereich vor einem Abzweig 6 vorgesehen sein, um dem Transportwagen 2 dort einen Fahrbefehlt zu erteilen, dem Abzweig 6 in einer der beiden möglichen Richtungen zu folgen, für ein "Abbiegen", z.B., die vorstehend beschriebene Ansteuerung der Motoren 9, 10 für eine Überführen in den abzweigenden Strang der Längsnut 4 zu bewirken. Die Kommunikationsschnittstellen 15 sind länglich ausgestaltet, um auch bei höheren Fahrgeschwindigkeiten des Transportwagens 2 eine ausreichende Übertragungszeit für die Kommunikation bereitzustellen. Beispielsweise würde eine Strecke von 50 mm bei einer Fahrgeschwindigkeit des Transportwagens von 1 m/s eine Kommunikationszeit von 50 ms erlauben. Diese Art der Informationsübertragung ist zudem lokal scharf begrenzt, sodass kein Übersprechen zu befürchten ist, und sie ist sehr sicher, vor allem unempfindlich gegenüber Fremdeinflüssen wie zum Beispiel Radiowellen und anderen elektromagnetischen Störungen.

Dadurch, dass die Transportbahn 3 keinerlei mechanische Bestandteile enthält und eine vollkommen geschlossene Oberfläche hat, ist die darin enthaltene Elektronik außerdem gegenüber Staub und Feuchtigkeit gut geschützt.

Der Transportwagen 2 trägt eine Aufnahme 16 für ein aufrechtes Einstellen von röhrchenförmigen Probengefäßen. Die Aufnahme 16 weist seitlich einen tief hinabreichenden Ausschnitt 17 auf, durch den ein automatisches Auslesen von Identifikationscodes über die ganze Länge des Probenröhrchens ermöglicht ist.

An der Aufnahme 16 ist seitlich eine Halterung 18 für einen Verschlussstopfen des Probenröhrchens vorgesehen. Mit Hilfe dieser Halterung 18 können Probenröhrchen nach dem Entfernen des Verschlussstopfens, dem sog. Decappen, ihren Originalstopfen mit sich führen, der z.B. nach Entnahme eines Aliquots aus der Probe wieder aufgesetzt werden kann. Dieses hat zahlreiche Vorteile gegenüber der bisherigen Verfahrensweise, bei der der Stopfen entsorgt und später durch einen Standardstopfen ersetzt oder bei der das Röhrchen durch eine Verschweißung verschlossen wird:
- Höhere Wirtschaftlichkeit durch Einsparung eines zusätzlichen Stopfens;
- Verringerung der Umweltbelastung durch entsorgte Plastikstopfen;
- Wiederherstellung des Röhrchens in den Originalzustand;
- sicherer Verschluss des Röhrchens durch Verwendung des Originalstopfens;
- unproblematisches Decappen bei erneuter Öffnung des Probenröhrchens;
- Verkleinerung, Vereinfachung, Verbilligung und Beschleunigung der Decapper-Mechanik, dadurch einfacheres Kaskadieren von Decappern zur Erhöhung des Durchsatzes.

An dem Transportwagen 2 kann insbesondere eine Mehrfarb-LED 19 vorgesehen sein, die mit einer farbkodierten Anzeige über den Betriebszustand des Transportwagen 2 während seines Betriebs informieren kann. Mit dieser LED 19 können zum Beispiel Zustände wie "bekommt Ladestrom", "kommuniziert mit Kommunikationsschnittstelle in der Fahrbahn" oder ähnlich angezeigt werden.

Weiterhin ist bei der gezeigten Ausführungsform an dem Transportwagen 2 ein zu der vorderen Stirnseite hin wirksamer Näherungssensor 20 vorgesehen. Dieser sorgt bei Annäherung auf ein Hindernis für eine Herabsetzung der Geschwindigkeit bis auf eine geringe, kontrollierte Kollisionsgeschwindigkeit. Der Näherungssensor 20 sorgt außerdem dafür, dass bei Kolonnenfahrt der Transportwagen 2 ein konstanter Abstand in Abhängigkeit von der Geschwindigkeit eines vorausfahrenden Transportwagens 2 eingehalten wird.

Weiterhin ist bei der gezeigten Ausführungsform an dem Transportwagen 2 ein Tastschalter in Form einer Abschaltplatte 21 an der Vorderseite des Transportwagens 2 vorgesehen. Diese Abschaltplatte 21 sorgt bei einem Auffahren auf ein Hindernis für eine vollständige Abschaltung der Elektronik des Transportwagens 2, um dadurch die in den Kondensatoren vorhandene elektrische Energie bis zu einem Wiederanfahren des Transportwagens 2 vorrätig zu halten. Damit dieser Abschaltmechanismus funktioniert, ist das zuvor beschriebene Auffahren auf ein Hindernis mit kontrollierter Geschwindigkeit bis zum Abschalten erforderlich. Die Abschaltplatte 21 hat einen kleinen Fortsatz 22, der in die Längsnut 4 reicht. In Bearbeitungspunkten fährt der Transportwagen 2 mit dem Fortsatz gegen einen Stopp-Schieber, der in die Längsnut 4 eingeschoben werden kann und der eine besonders genaue Positionierung des Transportwagens 2 erlaubt.

In dem gezeigten Ausführungsbeispiel ist an dem Führungsvorsprung 5 ein Kugellager 23 festgelegt, um eine Reibung in der Längsnut 4 zu verringern. Dies ist besonders wichtig in schnell gefahrenen Kurven. Außerdem trägt der durch das Kugellager 23 vergrößerte Radius zu einer Glättung von Unebenheiten in der Längsnut 4 und damit zu einer Beruhigung des Laufs bei. In schnell gefahrenen Kurven oder in Kurven mit engem Radius kann in der Transportbahn 3 eine seitliche Abstützung vorgesehen sein. Hier tragen dann an dem hinteren Ende des Transportwagens vorgesehene Kugellager 24, die reibungsarm an der Abstützung anliegen, zu einer weiteren Stabilisierung des Transportwagens 2 bei, sodass auch Kurven mit engen Radien mit relativ hoher Geschwindigkeit durchfahren werden können.

Weiterhin weist in dem gezeigten Ausführungsbeispiel der Transportwagen 2 eine Aussparung 25 an seinem hinteren Ende auf. Diese ermöglicht ein Hochfahren eines Stopp-Schiebers, wenn zwei Transportwagen 2 dicht aufeinander folgen. Insoweit ermöglicht diese Aussparung eine kontrollierte Trennung von zwei aufeinanderfolgenden Transportwagen 2.

Der Transportwagen 2 kann zusätzlich zu seinem Eigengewicht durch Magnete 26 im Bereich der Eisenunterlagen unterhalb Stromschienen 11 auf die Fahrbahn gezogen werden. Dieses ist sinnvoll, um die Haftung der Antriebsräder 7 bei eventuellen Steigungen zu verstärken oder aber zusammen mit einem weiteren Paar weiterer Magnete 27 im Bereich der Vorderräder ein Kippen nach hinten oder nach vorn in Steigungen oder Gefällen zu vermeiden, insbesondere bei höheren Geschwindigkeiten. Bei entsprechender Auslegung ist auch ein über Kopf Fahren beispielsweise zur Entleerung von Transportwagen 2 denkbar.

In dem gezeigten Ausführungsbeispiel ist an dem Transportwagen 2 auf dessen Unterseite ein spezieller optischer Sensor 29 angeordnet, der als "Maussensor" bezeichnet werden kann. Hierbei handelt es sich um einen wie in optischen Computer-Mäusen verwendeten Sensor, mit dem Streckenmessung, Richtungserkennungen und auch eine Geschwindigkeitsbestimmung durchgeführt werden kann. Beim Einfahren in eine Kurve erkennt dieser Sensor nicht nur die Krümmung einer Wegstrecke, sondern erlaubt auch die Berechnung des Krümmungsradius, sodass eine optimale Regelung der Antriebsgeschwindigkeiten der angetriebenen Räder 7 des Transportwagens 2 möglich ist.

Ein besonderer Vorteil der in dem vorstehend beschriebenen Ausführungsbeispiel beschriebenen und verwirklichten, erfindungsgemäßen Gestaltung soll hier noch einmal hervorgehoben werden: Während einerseits die Transportbahn 3 bis auf die Verarbeitungsstellen - das sind die Stellen, an denen der Inhalt bzw. die Proben in den PTS bearbeitet wird - mechanisch völlig passiv ist, was ihrer Funktionssicherheit zugutekommt, werden kritische Funktionen in den Transportwagen 2 verlagert. Dieses hat den Vorteil, dass bei eventuellen Funktionsstörungen ein betroffener Transportwagen 2 einfach aus dem System herausgenommen werden und ggf. durch einen anderen Transportwagen 2 ersetzt werden kann, ohne dass die Funktion des gesamten Systems darunter leidet, da es eben keiner Arbeiten an der Transportbahn 3 bedarf, die von den Transportwagen 2 weiter genutzt werden kann.

### Bezugszeichenliste

- 1: Transportsystem
- 2: Transportwagen
- 3: Transportbahn
- 4: Längsnut
- 5: Führungsvorsprung
- 6: Abzweig
- 7: Rad
- 8: Rad
- 9: Gleichstrommotor
- 10: Gleichstrommotor
- 11: Stromschiene
- 12: Kontakt
- 13: Federzunge
- 14: Magnet
- 15: erste optische Kommunikationsschnittstelle
- 16: Aufnahme
- 17: Ausschnitt
- 18: Halterung
- 19: Mehrfarb-LED
- 20: Nährungssensor
- 21: Abschaltplatte
- 22: Fortsatz
- 23: Kugellager
- 24: Kugellager
- 25: Aussparung
- 26: Magnet
- 27: Magnet
- 28: zweite optische Kommunikationsschnittstellen
- 29: Sensor

## Patentansprüche

1. Transportsystem (1) für den Transport von Proben in einem Analyselabor, insbesondere medizinischen und/oder chemischen Analyselabor, mit einer Fahrwege vorgebenden Transportbahn (3) und mit wenigstens einem für ein Bewegen entlang der Fahrwege auf der Transportbahn (3) eingerichteten, eine Aufnahme (16) für eine zu transportierende Probe aufweisenden, selbstfahrenden Transportwagen (2), wobei der Transportwagen (2) elektromotorisch angetriebene Räder (7), einen elektrischen Energiespeicher zum Bereitstellen elektrischer Energie für den elektromotorischen Antrieb der Räder (7) sowie eine Steuerung für den elektromotorischen Antrieb (9, 10) aufweist, wobei der Transportwagen (2) an einer im Betrieb in Fahrtrichtung nach vorn weisenden Seite einen Tastschalter (21) aufweist, dessen Betätigung eine elektrische Hauptversorgungsleitung zwischen dem elektrischen Energiespeicher und in dem Transportwagen (2) angeordneten elektrischen Verbrauchern unterbricht,
**dadurch gekennzeichnet, dass**
der Tastschalter (2) in eine Einschaltstellung vorgespannt ist, sodass beim Auflösen seiner Betätigung der Tastschalter (2) wieder in die Einschaltstellung verfährt, und so die Verbindung zwischen dem elektrischen Energiespeicher und den in dem Transportwagen (2) angeordneten elektrischen Verbrauchern wiederhergestellt wird.

2. Transportsystem (1) nach Anspruch 1, **dadurch gekennzeichnet, dass** der Transportwagen (2) vier Räder (7, 8) aufweist, die jeweils in einer Anordnung von zwei parallel zueinander ausgerichteten Achsen platziert sind und von denen die Räder (7) einer ersten Achse angetrieben, die Räder (8) einer zweiten Achse nicht angetrieben sind und dass die Räder (7) der angetriebenen Achse jeweils mit einem eigenen elektromotorischen Antrieb (9, 10) verbunden und über diesen jeweils mit von der Steuerung individuell vorgebbarer Rotationsgeschwindigkeit antreibbar sind, wobei entlang der Fahrwege in der Transportbahn (3) Längsnuten (4) geführt sind und an dem Transportwagen (2) ein unterseitig vorstehender, zum Eingriff in die Längsnuten (4) ausgebildeter Führungsvorsprung (5) gebildet ist.

3. Transportsystem (1) nach Anspruch 2, **dadurch gekennzeichnet, dass** der Tastschalter (21) einen zum Eingriff in die Längsnut (4) vorgesehenen, nach unten weisenden Vorsprung (22) aufweist.

4. Transportsystem (1) nach einem der Ansprüche 2 oder 3, **gekennzeichnet durch** einen an dem Führungsvorsprung (5) über ein Wälzlager (23) gelagerten Kontaktring zum Kontaktieren der seitlichen Begrenzungen der Längsnuten (4).

5. Transportsystem (1) nach Anspruch einem der vorhergehenden Ansprüche, **dadurch gekennzeichnet, dass** der elektrische Energiespeicher durch einen oder mehrere Kondensatoren gebildet ist.

6. Transportsystem (1) nach einem der vorhergehenden Ansprüche, **gekennzeichnet durch** in der Transportbahn (3) und entlang der Fahrwege abschnittsweise vorgesehene Ladestrecken (11) zum Übertragen von elektrischer Ladung auf den Transportwagen (2) zum Aufladen des elektrischen Energiespeichers während einer Überfahrt einer Ladestrecke (11).

7. Transportsystem (1) nach Anspruch 5, **gekennzeichnet durch** in den Ladestrecken (11) entlang des Fahrweges verlaufende Leiterbahnen, insbesondere aus Kupfer, und durch mit den Leiterbahnen in Kontakt bringbare Schleif- oder Rollkontakte (12) an dem Transportwagen (2) zum Kontaktieren der Leiterbahnen (11).

8. Transportsystem (1) nach Anspruch 6, **dadurch gekennzeichnet, dass** die Schleif- oder Rollkontakte (12) federnd gelagert und in eine Position vorgespannt sind, in der die Schleif- oder Rollkontakte (12) von der Transportbahn (3) abgehoben sind und dass in den Ladestrecken (11) Magnete oder ein magnetisierbares Material vorgesehen sind und weiterhin an den federnd gelagerten Schleif- oder Rollkontakten (12) Magnete oder ein magnetisierbares Material in einer solchen Weise vorgesehen sind, dass dann, wenn der Transportwagen (2) die Ladestrecke (11) überfährt, die Schleif- oder Rollkontakte (12) magnetisch in Richtung der Leiterbahnen (11) gezogen werden und diese kontaktieren.

9. Transportsystem (1) nach einem der vorhergehenden Ansprüche, **dadurch gekennzeichnet, dass** zum Ausbilden einer bidirektionalen Kommunikation mit dem Transportwagen (2) erste optische, insbesondere Infrarot-, Kommunikationsschnittstellen (15) in der Transportbahn (3) integriert und im Bereich des Fahrweges angeordnet sind und dass zweite optische, insbesondere Infrarot-, Kommunikationsschnittstellen (28) an dem Transportwagen (2) angeordnet sind.

10. Transportsystem (1) nach einem der vorhergehenden, **gekennzeichnet durch** einen in dem Transportwagen (2) angeordneten und mit der Steuerung verbundenen, mit einem Messbereich in Fahrtrichtung des Transportwagens (2) nach vorn weisenden Abstandssensor (20), wobei die Steuerung eingerichtet ist, bei einem von dem Abstandssensor (20) erkannten und unterhalb eines vorgegebenen Schwellwertes liegenden Hindernis die Fahrtgeschwindigkeit des Transportwagens (2) zu verringern und/oder bei einem bewegten Hindernis die Fahrtgeschwindigkeit des Transportwagens (2) zum Einhalten eines gleichbleibend eingehaltenen Mindestabstandes anzupassen.

11. Transportsystem (1) nach einem der vorhergehenden Ansprüche, **gekennzeichnet durch** in der Transportbahn (3) an vorgesehenen Haltepositionen angeordnete Stopper, wobei die Stopper entweder aus der Ebene der Transportbahn (3) zum Hineinragen in den Fahrweg und zum Anschlagen an einen Transportwagen (2) nach oben herausfahrbar oder, soweit dieser Anspruch unmittelbar oder mittelbar auf den Anspruch 2 rückbezogen ist, in die Längsnut (4) einbringbar gebildet sind.

12. Transportsystem (1) nach einem der vorhergehenden Ansprüche, **dadurch gekennzeichnet, dass** der Transportwagen (2) im Bereich von im Betrieb in Fahrtrichtung gesehen hinten gelegenen seitlichen Ecken jeweils einen über ein Wälzlager (24) gelagerten, seitlich vorstehenden Rollring aufweist.

13. Transportsystem (1) nach einem der vorhergehenden Ansprüche, **dadurch gekennzeichnet, dass** die an dem Transportwagen (2) vorgesehene Aufnahme (16) für die zu transportierende Probe eine einen Boden aufweisende Aufnahmeröhre ist.

14. Transportsystem (1) nach Anspruch 13, **dadurch gekennzeichnet, dass** die Aufnahmeröhre in ihrer Seitenwand einen Längsausschnitt (17) aufweist.

15. Transportsystem (1) nach einem der vorhergehenden Ansprüche, **dadurch gekennzeichnet, dass** der an dem Transportwagen (2) vorgesehenen Aufnahme (16) für die zu transportierende Probe ein an dem Transportwagen (2) ausgebildeter Halter (18) für eine zu der Probe gehörende Verschlusskappe zugeordnet ist.

16. Transportsystem (1) nach einem der vorhergehenden Ansprüche, **gekennzeichnet durch** einen an dem Transportwagen (2) angeordneten, nach unten weisenden optischen Abtastsensor (29), mit dem eine Bewegungsrichtung und eine Bewegungsgeschwindigkeit des Transportwagens (2) relativ zu der Transportbahn (3) erfasst werden können.

17. Transportsystem (1) nach einem der vorhergehenden Ansprüche, **gekennzeichnet durch** eine in wenigstens zwei horizontal übereinander angeordneten Ebenen gebildete Transportbahn (3), wobei Rampenabschnitte vorgesehen sind zum Verbinden der übereinander angeordneten Ebenen.

18. Transportsystem (1) nach Anspruch 17, **dadurch gekennzeichnet, dass** im Bereich der Rampenabschnitte entlang des Fahrweges Magnete oder ein magnetisierbares Material vorgesehen sind zum Zusammenwirken mit an dem Transportwagen (2) ausgebildeten Magneten (26, 27) oder einem magnetisierbaren Material zum Erzeugen einer magnetischen Haltekraft zum Halten des Transportwagens (2) auf der Transportbahn (3).

19. Transportsystem (1) nach einem der vorhergehenden Ansprüche, **dadurch gekennzeichnet, dass** es eine Vielzahl von gleich gebildeten Transportwagen (2) umfasst, wobei die Transportwagen (2) jeweils eine eindeutige, individuelle und elektronisch auslesbare Kennung aufweisen.

## Claims

1. Transport system (1) for transporting samples in an analysis laboratory, in particular a medical and/or chemical analysis laboratory, comprising a transport track (3) defining travel paths and at least one self-propelled transport trolley (2) configured to move along the travel paths on the transport track (3) and comprising a receptacle (16) for a sample to be transported, wherein the transport trolley (2) comprises electrically motor-driven wheels (7), an electrical energy storage device for supplying electrical energy for the electric motor drive of the wheels (7), and a control system for the electric motor drive (9, 10), wherein the transport trolley (2) comprises, on a side facing forwards in the direction of travel during operation, a push-button switch (21) whose actuation interrupts a main electrical supply line between the electrical energy storage device and electrical consumers arranged within the transport trolley (2),
**characterised in that**
the push-button switch (2) is biased into an on position, so that when its actuation is released, the push-button switch (2) returns to the on position, thereby restoring the connection between the electrical energy storage device and the electrical consumers arranged in the transport trolley (2).

2. Transport system (1) according to claim 1, **characterised in that** the transport trolley (2) has four wheels (7, 8), each of which is arranged in a configuration of two axles aligned parallel to one another, and of which the wheels (7) of a first axle are driven, whilst the wheels (8) of a second axle are not driven, and **in that** the wheels (7) of the driven axle are each connected to their own electric motor drive (9, 10) and can be driven via this at a rotational speed individually preset by the control unit, wherein longitudinal grooves (4) are formed along the travel paths in the transport track (3) and a guide projection (5) is formed on the underside of the transport trolley (2), designed to engage with the longitudinal grooves (4).

3. Transport system (1) according to claim 2, **characterised in that** the limit switch (21) has a downward-facing projection (22) provided for engagement with the longitudinal groove (4).

4. Transport system (1) according to one of claims 2 or 3, **characterised by** a contact ring mounted on the guide projection (5) via a roller bearing (23) for contacting the lateral boundaries of the longitudinal grooves (4).

5. Transport system (1) according to one of the preceding claims, **characterised in that** the electrical energy storage device is formed by one or more capacitors.

6. Transport system (1) according to one of the preceding claims, **characterised by** charging sections (11) provided in sections in the transport track (3) and along the travel paths for transferring electrical charge to the transport trolley (2) to charge the electrical energy storage device during a passage over a charging section (11).

7. Transport system (1) according to claim 5, **characterised by** conductor tracks, in particular made of copper, extending in the charging sections (11) along the track, and by sliding or rolling contacts (12) on the transport trolley (2) which can be brought into contact with the conductor tracks (11) for contacting the conductor tracks (11).

8. Transport system (1) according to claim 6, **characterised in that** the sliding or rolling contacts (12) are spring-mounted and biased into a position in which the sliding or rolling contacts (12) are lifted off the transport track (3), and **in that** magnets or a magnetisable material are provided in the charging sections (11) and, furthermore, magnets or a magnetisable material are provided on the spring-mounted sliding or rolling contacts (12) are provided with magnets or a magnetisable material in such a way that, when the transport carriage (2) passes over the loading section (11), the sliding or rolling contacts (12) are magnetically drawn towards the conductor tracks (11) and make contact with them.

9. Transport system (1) according to one of the preceding claims, **characterised in that**, to establish bidirectional communication with the transport trolley (2), first optical, in particular infrared, communication interfaces (15) are integrated into the transport track (3) and arranged in the vicinity of the travel path, and that second optical, in particular infrared, communication interfaces (28) are arranged on the transport trolley (2).

10. Transport system (1) according to one of the preceding, **characterised by** a distance sensor (20) arranged in the transport trolley (2) and connected to the control unit, with a measuring range pointing forwards in the direction of travel of the transport trolley (2), wherein the control unit is configured to reduce the travel speed of the transport trolley (2) in the event of an obstacle detected by the distance sensor (20) and lying below a predetermined threshold value, and/or to adjust the travel speed of the transport trolley (2) in the event of a moving obstacle in order to maintain a consistently maintained minimum distance.

11. Transport system (1) according to one of the preceding claims, **characterised by** stoppers arranged at predetermined stopping positions in the transport track (3), wherein the stoppers are either extendable upwards from the plane of the transport track (3) to project into the travel path and abut against a transport trolley (2), or, insofar as this claim relates directly or indirectly to claim 2, are formed to be insertable into the longitudinal groove (4).

12. Transport system (1) according to one of the preceding claims, **characterised in that** the transport trolley (2) has, in the region of the lateral corners located at the rear when viewed in the direction of travel during operation, a laterally projecting roller ring mounted via a roller bearing (24) in each case.

13. Transport system (1) according to any of the preceding claims, **characterised in that** the receptacle (16) provided on the transport trolley (2) for the sample to be transported is a receptacle tube having a base.

14. Transport system (1) according to claim 13, **characterised in that** the receiving tube has a longitudinal cut-out (17) in its side wall.

15. Transport system (1) according to one of the preceding claims, **characterised in that** the receptacle (16) provided on the transport trolley (2) for the sample to be transported is associated with a holder (18) formed on the transport trolley (2) for a cap belonging to the sample.

16. Transport system (1) according to one of the preceding claims, **characterised by** a downward-facing optical scanning sensor (29) arranged on the transport trolley (2), with which a direction of movement and a speed of movement of the transport trolley (2) relative to the transport track (3) can be detected.

17. Transport system (1) according to any one of the preceding claims, **characterised by** a transport track (3) formed in at least two planes arranged horizontally one above the other, wherein ramp sections are provided to connect the superimposed planes.

18. Transport system (1) according to claim 17, **characterised in that** magnets or a magnetisable material are provided in the region of the ramp sections along the travel path to interact with magnets (26, 27) or a magnetisable material formed on the transport trolley (2) to generate a magnetic holding force for holding the transport trolley (2) on the transport track (3).

19. Transport system (1) according to one of the preceding claims, **characterised in that** it comprises a plurality of identically constructed transport trolleys (2), wherein the transport trolleys (2) each have a unique, individual and electronically readable identifier.

## Revendications

1. Système de transport (1) destiné au transport d'échantillons dans un laboratoire d'analyse, en particulier un laboratoire d'analyse médicale et/ou chimique, comprenant une voie de transport (3) définissant des trajectoires de déplacement et au moins un chariot de transport automoteur (2) configuré pour se déplacer le long des trajectoires de déplacement sur la voie de transport (3) et comprenant un réceptacle (16) pour un échantillon à transporter, dans lequel le chariot de transport (2) comprend des roues entraînées par un moteur électrique (7), un dispositif de stockage d'énergie électrique destiné à fournir de l'énergie électrique pour l'entraînement par moteur électrique des roues (7), et un système de commande de l'entraînement par moteur électrique (9, 10), dans lequel le chariot de transport (2) comprend, sur un côté tourné vers l'avant dans le sens de la marche pendant le fonctionnement, un interrupteur à bouton-poussoir (21) dont l'actionnement interrompt une ligne d'alimentation électrique principale entre le dispositif de stockage d'énergie électrique et les consommateurs électriques disposés à l'intérieur du chariot de transport (2),
**caractérisé en ce que**
l'interrupteur à bouton-poussoir (2) est précontraint en position fermée, de sorte que, une fois relâché, ledit interrupteur à bouton-poussoir (2) revient en position fermée, rétablissant ainsi la connexion entre le dispositif de stockage d'énergie électrique et les consommateurs électriques disposés dans le chariot de transport (2).

2. Système de transport (1) selon la revendication 1, **caractérisé en ce que** le chariot de transport (2) comporte quatre roues (7, 8), dont chacune est disposée selon une configuration à deux essieux alignés parallèlement l'un à l'autre, et parmi lesquelles les roues (7) d'un premier essieu sont motrices, tandis que les roues (8) d'un second essieu ne sont pas motrices, et **en ce que** les roues (7) de l'essieu entraîné sont chacune reliées à leur propre entraînement par moteur électrique (9, 10) et peuvent être entraînées par celui-ci à une vitesse de rotation préréglée individuellement par l'unité de commande, des rainures longitudinales (4) étant formées le long des trajectoires de déplacement dans la voie de transport (3) et une saillie de guidage (5) étant formée sur la face inférieure du chariot de transport (2), conçue pour s'engager dans les rainures longitudinales (4).

3. Système de transport (1) selon la revendication 2, **caractérisé en ce que** le fin de course (21) comporte une saillie (22) orientée vers le bas, prévue pour s'engager dans la rainure longitudinale (4).

4. Système de transport (1) selon l'une des revendications 2 ou 3, **caractérisé par** une bague de contact montée sur la saillie de guidage (5) via un roulement à rouleaux (23) pour venir en contact avec les bords latéraux des rainures longitudinales (4).

5. Système de transport (1) selon l'une des revendications précédentes, **caractérisé en ce que** le dispositif de stockage d'énergie électrique est formé par un ou plusieurs condensateurs.

6. Système de transport (1) selon l'une des revendications précédentes, **caractérisé par** des sections de charge (11) prévues par sections dans la voie de transport (3) et le long des trajectoires de déplacement pour transférer une charge électrique au chariot de transport (2) afin de charger le dispositif de stockage d'énergie électrique lors d'un passage sur une section de charge (11).

7. Système de transport (1) selon la revendication 5, **caractérisé par** des pistes conductrices, en particulier en cuivre, s'étendant dans les sections de charge (11) le long de la voie, et par des contacts glissants ou roulants (12) sur le chariot de transport (2) qui peuvent être mis en contact avec les pistes conductrices (11) pour établir le contact avec les pistes conductrices (11).

8. Système de transport (1) selon la revendication 6, **caractérisé en ce que** les contacts glissants ou roulants (12) sont montés sur ressort et sollicités dans une position dans laquelle les contacts glissants ou roulants (12) sont soulevés de la voie de transport (3), et **en ce que** des aimants ou un matériau magnétisable sont prévus dans les sections de charge (11) et, en outre, des aimants ou un matériau magnétisable sont prévus sur les contacts coulissants ou roulants (12) montés sur ressort de telle sorte que, lorsque le chariot de transport (2) passe au-dessus de la section de charge (11), les contacts coulissants ou roulants (12) sont attirés magnétiquement vers les pistes conductrices (11) et entrent en contact avec celles-ci.

9. Système de transport (1) selon l'une des revendications précédentes, **caractérisé en ce que**, pour établir une communication bidirectionnelle avec le chariot de transport (2), des premières interfaces de communication optiques, en particulier infrarouges (15), sont intégrées dans la voie de transport (3) et disposées à proximité du trajet de déplacement, et **en ce que** des seconds interfaces de communication optiques, en particulier infrarouges (28), sont disposées sur le chariot de transport (2).

10. Système de transport (1) selon l'une des revendications précédentes, **caractérisé par** un capteur de distance (20) disposé dans le chariot de transport (2) et relié à l'unité de commande, avec une plage de mesure orientée vers l'avant dans le sens de déplacement du chariot de transport (2), l'unité de commande étant configurée pour réduire la vitesse de déplacement du chariot de transport (2) en cas de détection par le capteur de distance (20) d'un obstacle situé en dessous d'une valeur seuil prédéterminée, et/ou pour ajuster la vitesse de déplacement du chariot de transport (2) en cas d'obstacle mobile afin de maintenir une distance minimale constante.

11. Système de transport (1) selon l'une des revendications précédentes, **caractérisé par** des butées disposées à des positions d'arrêt prédéterminées sur la voie de transport (3), dans lequel les butées sont soit extensibles vers le haut à partir du plan de la voie de transport (3) pour faire saillie dans la trajectoire de déplacement et venir en butée contre un chariot de transport (2), soit, dans la mesure où la présente revendication se rapporte directement ou indirectement à la revendication 2, sont formées de manière à pouvoir être insérées dans la rainure longitudinale (4).

12. Système de transport (1) selon l'une des revendications précédentes, **caractérisé en ce que** le chariot de transport (2) comporte, au niveau des coins latéraux situés à l'arrière lorsqu'on regarde dans le sens de déplacement pendant le fonctionnement, une couronne à rouleaux faisant saillie latéralement, montée respectivement via un roulement à rouleaux (24).

13. Système de transport (1) selon l'une quelconque des revendications précédentes, **caractérisé en ce que** le réceptacle (16) prévu sur le chariot de transport (2) pour l'échantillon à transporter est un tube réceptacle comportant un fond.

14. Système de transport (1) selon la revendication 13, **caractérisé en ce que** le tube récepteur présente une découpe longitudinale (17) dans sa paroi latérale.

15. Système de transport (1) selon l'une des revendications précédentes, **caractérisé en ce que** le récipient (16) prévu sur le chariot de transport (2) pour l'échantillon à transporter est associé à un support (18) formé sur le chariot de transport (2) pour un bouchon appartenant à l'échantillon.

16. Système de transport (1) selon l'une des revendications précédentes, **caractérisé par** un capteur de balayage optique (29) orienté vers le bas, disposé sur le chariot de transport (2), avec lequel une direction de déplacement et une vitesse de déplacement du chariot de transport (2) par rapport à la voie de transport (3) peuvent être détectées.

17. Système de transport (1) selon l'une quelconque des revendications précédentes, **caractérisé par** une voie de transport à pente (3) formée dans au moins deux plans disposés horizontalement l'un au-dessus de l'autre, dans lequel des sections de pente sont prévues pour relier les plans superposés.

18. Système de transport (1) selon la revendication 17, **caractérisé en ce que** des aimants ou un matériau magnétisable sont prévus dans la région des sections de rampe le long du trajet de déplacement pour interagir avec des aimants (26, 27) ou un matériau magnétisable formé sur le chariot de transport (2) afin de générer une force de retenue magnétique pour maintenir le chariot de transport (2) sur la voie de transport (3).

19. Système de transport (1) selon l'une des revendications précédentes, **caractérisé en ce qu'**il comprend une pluralité de chariots de transport (2) de construction identique, les chariots de transport (2) comportant chacun un identifiant unique, individuel et lisible électroniquement.
